# EUROPEAN PATENT APPLICATION

(11) **EP 4 382 961 A1**
(43) Date of publication of application: **12.06.2024**
(21) Application number: 23211453.8
(22) Date of filing: 22.11.2023
(51) Int. Cl.: G01S 7/497, G01S 17/931

(54) **TARGET CALIBRATION DEVICE**

(30) Priority: 30.11.2022 CN 202211533255
(71) Applicant: Anhui NIO Autonomous Driving Technology Co., Ltd., Hefei, Anhui 230601 (CN)
(72) Inventor: CAI, Yongkai, Hefei, Anhui (CN); XU, Kang, Hefei, Anhui (CN); XU, KE, Hefei, Anhui (CN); ZHI, Xiangyang, Hefei, Anhui (CN)
(74) Representative: Vossius & Partner Patentanwälte Rechtsanwälte mbB

(57) **Abstract**

The disclosure relates to the technical field of sensor calibration, and provides a target calibration device, aiming at solving the problem that the existing calibration method is limited by costs and locations and cannot adapt to calibration of all sensors on a vehicle. The target calibration device comprises a target body, a target holder, and a target base. The target body can be adjusted in attitude and height, and the target pattern on the target body is replaceable. The target base is provided with a movable assembly, so that the movement and fixation of the target calibration device can be realized. The target calibration device can adapt to various calibration requirements, is more suitable for large-scale and daily after-sales maintenance and calibration scenarios, and can support switching of calibration sites. The calibration using the target calibration device according to the disclosure is not limited by locations and has low costs. Since the target base can fix the entire device, the target pattern is ensured to be stationary during calibration, thereby improving the accuracy of the calibration process.

## Description

The present application claims priority of CN patent application 202211533255.5 filed on November 30, 2022 with the title "Target calibration device".

### Technical Field

The disclosure relates to the technical field of sensor calibration, and specifically provides a target calibration device.

### Background Art

With the rapid development of assisted driving and automatic driving technology in recent years, more and more mass-produced vehicles are provided with a large number of sensors such as cameras and LiDARs to provide reliable and redundant environmental awareness for vehicles. Cameras have different fields of view (FoVs) and different focal length types, and are respectively mounted at different positions on vehicles to provide passive light perception at different distances. There are a plurality of types of LiDARs according to working principles, mainly including solid-state, mechanical flash and other types. In order to complete high-precision and high-efficiency calibration of sensors of a vehicle, it is generally necessary to provide a plurality of known features or patterns in a fixed site, and the vehicle is stationarily parked at a predetermined position by using a centering device, so that the sensors on the vehicle can calibrate parameters according to the collected features or patterns.

However, first, the above multi-sensor calibration solution can be completed only in a high-precision calibration room, and its hardware cost is high, so that the solution cannot be easily popularized. Second, vehicle calibration requires special transportation or driving to a specific place, or even to a specific city, and thus requires high time and labor costs and a long calibration period. Therefore, for the after-sales calibration of mass-produced vehicles in batches, the above solution cannot meet the requirements for a calibration frequency level and low maintenance costs. In addition, conventional calibration methods, such as advanced driving assistance system (ADAS) calibration and 360° around-view calibration, are all aimed at specific cameras, and cannot adapt to calibration of all the sensors on the vehicle.

### Summary

In order to overcome the above shortcomings, the disclosure is proposed to solve or at least partially solve the problem that an existing calibration method is limited by costs and locations and cannot adapt to calibration of all sensors on a vehicle.

The disclosure provides a target calibration device, the device comprising:
a target body, a target pattern on the target body being replaceable;
a target holder connected to the target body and provided with an adjustable assembly, the adjustable assembly being used for adjusting the target body in attitude and height; and
a target base connected to the target holder and provided with a movable assembly, the movable assembly being capable of moving and fixing the device.

In a technical solution of the target calibration device described above, the adjustable assembly comprises a height adjusting assembly and an attitude adjusting assembly, wherein the height adjusting assembly is used for adjusting the height of the target body, and the attitude adjusting assembly is used for adjusting the attitude of the target body.

In a technical solution of the target calibration device described above, the attitude comprises a horizontal rotation angle, and the attitude adjusting assembly comprises a first attitude adjusting assembly for adjusting the horizontal rotation angle of the target body, wherein the horizontal rotation angle is a rotation angle about a normal direction of a plane of the target body.

In a technical solution of the target calibration device described above, the target holder is provided with a horizontal rotation angle indicating assembly, and the horizontal rotation angle of the target body is adjusted according to the horizontal rotation angle indicating assembly.

In a technical solution of the target calibration device described above, the attitude comprises a pitching rotation angle, and the attitude adjusting assembly comprises a second attitude adjusting assembly for adjusting the pitching rotation angle of the target body.

In a technical solution of the target calibration device described above, the target holder is provided with a pitching rotation angle indicating assembly, and the pitching rotation angle of the target is adjusted according to the pitching rotation angle indicating assembly.

In a technical solution of the target calibration device described above, the height adjusting assembly is connected to a pulley structure arranged in the target holder, and the pulley structure is moved by adjusting the height adjusting assembly, so as to adjust the height of the target body.

In a technical solution of the target calibration device described above, the pulley structure has a damping function.

In a technical solution of the target calibration device described above, the target holder is provided with a height indicating assembly relative to the ground, and the height indicating assembly is used for determining the height of the target body relative to the ground.

In a technical solution of the target calibration device described above, the target body is detachably connected to the target holder, and the target pattern is replaced by replacing the target body.

In a technical solution of the target calibration device described above, a plurality of target bodies are provided, which are respectively independently adjustable in attitude and height.

In a technical solution of the target calibration device described above, the movable assembly is defined as four lockable rollers arranged on a target chassis.

In a technical solution of the target calibration device described above, the device is made of aluminum.

The above one or more technical solutions of the disclosure have at least one or more of the following beneficial effects.

In the technical solutions of the disclosure, the target calibration device according to the disclosure comprises a target body, a target holder, and a target base. The target body can be adjusted in attitude and height, and a target pattern on the target body is replaceable. The target base is provided with a movable assembly, so that the movement and fixation of the target calibration device can be realized. With the above arrangement, the target calibration device according to the disclosure can adapt to various calibration requirements, such as requirements for calibration of various sensors, because the attitude and height can be adjusted and the target pattern can be replaced. In addition, since the target pattern can be replaced, when the target pattern is worn out, the target pattern can be replaced separately, which is more suitable for large-scale and daily after-sales maintenance and calibration scenarios. Furthermore, since the target base can move, the switching of calibration sites can be supported, and compared with a method of performing calibration by using a high-precision calibration room, the calibration using the target calibration device according to the disclosure is not limited by sites and has low costs. In addition, since the target base can also fix the entire device, it is possible to ensure that the sensors obtain a completely stationary target pattern during calibration, thereby ensuring the accuracy of the calibration process.

### Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure. In addition, similar components are represented by similar numbers in the figures, in which:
FIG. 1 is a schematic structural diagram of the main components of a target calibration device according to an embodiment of the disclosure; and
FIG. 2 is a schematic structural diagram of the main components of a target calibration device according to an implementation of an embodiment of the disclosure.

### List of reference signs:

1: Target body; 2: Target holder; 3: Target base; 31: Movable assembly.

### Detailed Description of Embodiments

Some implementations of the disclosure are described below with reference to the accompanying drawings. Those skilled in the art should understand that these implementations are only used to explain the technical principles of the disclosure, and are not intended to limit the scope of protection of the disclosure. Those skilled in the art can make adjustments to the implementations according to requirements, so as to adapt to specific application scenarios. For example, although this description is described with a target base as an example, apparently, various other supporting structures may be adopted in the disclosure, provided that the supporting structure can achieve an effect of stably supporting a target holder.

It should be noted that in the description of the disclosure, the terms, such as "center", "upper", "lower", "left", "right", "vertical", "horizontal", "inner" and "outer", that indicate directions or positional relationships are based on the directions or positional relationships shown in the accompanying drawings only for convenience of description, and do not indicate or imply that the device or element must have a specific orientation, be constructed and operated in a specific orientation, and therefore cannot be construed as limitation to the disclosure. In addition, the terms "first", "second", and "third" are for descriptive purposes only, and may not be interpreted as indicating or implying relative importance.

In addition, it should also be noted that, in the description of the disclosure, the terms "mount", "connection" and "connected" should be interpreted in a broad sense unless explicitly defined and limited otherwise, which, for example, may mean a fixed connection, a detachable connection or an integral connection; may be a mechanical connection or an electrical connection; and may be a direct connection, an indirect connection by means of an intermediary, or internal communication between two elements. For those skilled in the art, the specific meanings of the foregoing terms in the disclosure can be interpreted according to a specific situation.

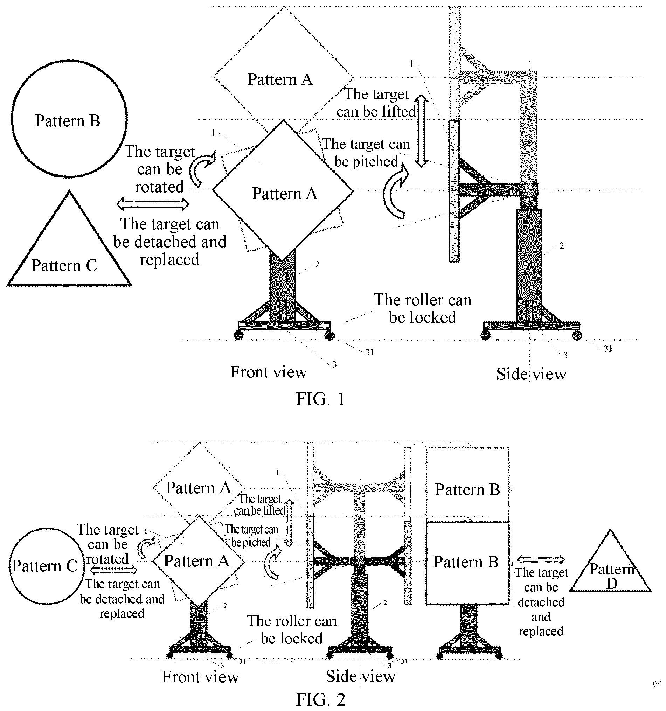

Referring to FIG. 1, FIG. 1 is a schematic structural diagram of the main components of a target calibration device according to an embodiment of the disclosure. FIG. 1 includes a front view and a side view of the target calibration device. As shown in FIG. 1, the target calibration device according to the embodiment of the disclosure may comprise a target body 1, a target holder 2, and a target base 3.

In this embodiment, a target pattern on the target body 1 is replaceable. The target holder 2 may be connected to the target body 1. The target holder 2 may be provided with an adjustable assembly, which may be used for adjusting the target body 1 in attitude and height. The target base 3 may be connected to the target holder 2. The target base 3 may be provided with a movable assembly 31, and the movable assembly 31 can realize movement and fixation of the target calibration device.

In an implementation of the embodiment of the disclosure, the target body 1 may be detachably connected to the target holder 2, and the target pattern can be replaced by replacing the target body 1.

In this implementation, a plurality of detachable target bodies 1 may be provided in advance for the target calibration device, and the plurality of target bodies 1 have different target patterns, so that the target pattern can be replaced by replacing the target body 1, and thus requirements for the target patterns in different calibration scenarios and different calibration algorithms can be met.

Still referring to FIG. 1, as shown in FIG. 1, the target body 1 may be detached from the target holder 2 and replaced with a target body 1 with a different target pattern. For example, a target body 1 whose target pattern is pattern A is replaced with a target body 1 whose target pattern is pattern B or pattern C. In this way, it is possible to replace the target bodies 1 with different patterns and shapes at any time.

In an implementation, the target pattern may be provided on the target body 1 in a detachably connected manner, such as being adhered to the target body 1 by adhesion, so that the target pattern can be replaced.

In an implementation, the target pattern may be in various forms, such as a checkerboard, a two-dimensional code, a circular array, a circular ring array, and parallel lines in a plane.

In an implementation of the embodiment of the disclosure, the adjustable assembly of the target holder 2 may comprise a height adjusting assembly and an attitude adjusting assembly. The height adjusting assembly may be used for adjusting the height of the target body 1, and the attitude adjusting assembly is used for adjusting the attitude of the target body 1.

In this implementation, the height of the target body 1 can be adjusted by the height adjusting assembly, that is, the height of the target body 1 can be adjusted to meet requirements for the height of the target calibration device in different calibration scenarios. The attitude of the target body 1 can be adjusted by the attitude adjusting assembly, that is, the attitude of the target body 1 can be adjusted to meet requirements for the attitude of the target calibration device in different calibration scenarios. That is to say, the target calibration device according to the embodiment of the disclosure can meet the requirements for calibration scenarios in different heights and different attitudes.

In an implementation, the attitude may comprise a horizontal rotation angle, and the attitude adjusting assembly may comprise a first attitude adjusting assembly, which may be used for adjusting the horizontal rotation angle of the target body 1. The horizontal rotation angle is a rotation angle about a normal direction of a plane of the target body.

In this implementation, still referring to FIG. 1, as shown in FIG. 1, the target body 1 may adjust the horizontal rotation angle by means of the first attitude adjusting assembly (not shown), that is, "the target can be rotated" as shown in the figure is realized.

In an implementation, the target holder 2 may be provided with a horizontal rotation angle indicating assembly, and the horizontal rotation angle of the target body 1 can be adjusted according to the horizontal rotation angle indicating assembly.

In this implementation, a current horizontal rotation angle of the target body 1 can be determined according to the horizontal rotation angle indicating assembly on the target holder 2, so as to adjust the horizontal rotation angle of the target body 1.

In an implementation, the attitude may comprise a pitching rotation angle, and the attitude adjusting assembly may comprise a second attitude adjusting assembly, which may be used for adjusting the pitching rotation angle of the target body 1.

In this implementation, still referring to FIG. 1, as shown in FIG. 1, the target body 1 may adjust the pitching rotation angle by means of the second attitude adjusting assembly (not shown), that is, "the target can be pitched" as shown in the figure is realized.

In an implementation, the target holder 2 may be provided with a pitching rotation angle indicating assembly, and the pitching rotation angle of the target body 1 can be adjusted according to the pitching rotation angle indicating assembly.

In this implementation, a current pitching rotation angle of the target body 1 can be determined according to the pitching rotation angle indicating assembly on the target holder 2, so as to adjust the pitching rotation angle of the target body 1.

In an implementation, the horizontal rotation angle indicating assembly and the pitching rotation angle indicating assembly may be respectively angle indicating scales mounted behind the target body 1, so as to respectively determine the horizontal rotation angle and the pitching rotation angle of the target body 1 by means of the angle indicating scales.

In an implementation, the angle indicating scale may be a common angle indicating device such as an angle indicator and an angle indicating dial.

In an implementation, the height adjusting assembly arranged on the target holder 2 may be connected to a pulley structure arranged in the target holder, and the pulley structure can be moved by adjusting the height adjusting assembly, so as to adjust the height of the target body 1.

In this implementation, the movement of the pulley structure connected to the height adjusting assembly can be realized by adjusting the height adjusting assembly, so as to adjust the height of the target body 1.

In an implementation, the height adjusting assembly may be a hand crank, and the pulley structure can be moved by rotating the hand crank in a hand-cranked manner, so that the height of the target body 1 can be adjusted more easily and conveniently.

In an implementation, the pulley structure may have a damping function.

In this implementation, after the target body 1 is adjusted to any required height, the target body 1 can be kept at this height by means of the damping function of the pulley structure, and it is unnecessary to manually apply an external force to keep the target body 1 stationary.

In an implementation, the target holder 2 may be further provided with a height indicating assembly relative to the ground, and the height indicating assembly may be used for determining the height of the target body 1 relative to the ground.

In this implementation, the target holder 2 may be provided with the height indicating assembly, and the height of the target body 1 relative to the ground can be determined by the height indicating assembly, so as to adjust the height of the target body 1, that is, to realize "the target can be lifted" as shown in FIG. 1. The height indicating assembly is not shown in FIG. 1.

In an implementation, the height indicating assembly may be a height ruler arranged on the target holder 2.

In an implementation, the height indicating assembly may also be a height indicating device commonly used in the field, such as an electronic height indicator arranged on the target holder 2.

In an implementation, the height adjusting assembly may also be a fixable and slidable connecting structure arranged on the target holder 2 and connected in parallel to the target holder 2, and a fixing nut is arranged on the connecting structure, so that the fixing and sliding of the connecting structure are realized by the fixing nut. For example, when it is necessary to adjust the height of the target body 1, the fixing nut on the connecting structure can be unscrewed, and the height of the target body 1 can be adjusted by sliding the connecting structure. When a required height is reached, the fixing nut on the connecting structure can be tightened, thereby fixing the height of the target body 1.

In an implementation of the embodiment of the disclosure, the movable assembly 31 on the target base 3 may be defined as four lockable rollers arranged on a target chassis.

In this implementation, still referring to FIG. 1, as shown in FIG. 1, with the arrangement of the four lockable rollers, the target calibration device according to the embodiment of the disclosure can be easily moved between different places by hand pushing. In addition, when the target calibration device needs to be fixed, the lockable rollers can be locked, thus ensuring that the target pattern on the target calibration device is completely stationary, so that the sensors that need to be calibrated can obtain the target pattern that is completely stationary.

In an implementation of the embodiment of the disclosure, the target calibration device is made of aluminum. With the application of the aluminum, the target calibration device can be lighter, which better facilitates movement between different places. Moreover, the aluminum also has anti-rust properties, so that the target calibration device according to the embodiment of the disclosure can be more durable.

In an implementation, the target holder 2 and the target base 3 of the target calibration device are both of a hollow structure. With the arrangement of the hollow structure, the entire target calibration device can be lighter, and the device is easier to move between different places.

In an implementation, the target calibration device is of an integral waterproof structure. For example, the target body 1, the target holder 2 and the target base 3 are all made of a waterproof material. With the waterproof design, the target calibration device can be applied to more calibration scenarios, such as an outdoor calibration scenario in a rainy environment.

The target calibration device according to the embodiment of the disclosure comprises a target body 1, a target holder 2, and a target base 3. The target body 1 can be adjusted in attitude and height, and a target pattern on the target body 1 is replaceable. The target base 3 is provided with a movable assembly 31, so that the movement and fixation of the target calibration device can be realized. With the above arrangement, the target calibration device according to the disclosure can adapt to various calibration requirements, such as requirements for calibration of various sensors, because the attitude and height can be adjusted and the target pattern can be replaced. In addition, since the target pattern can be replaced, when the target pattern is worn out, the target pattern can be replaced separately, which is more suitable for large-scale and daily after-sales maintenance and calibration scenarios. Furthermore, since the target base 3 can move, the switching of calibration sites can be supported, and compared with a method of performing calibration by using a high-precision calibration room, the calibration using the target calibration device according to the disclosure is not limited by sites and has low costs. In addition, since the target base 3 can also fix the entire device, it is possible to ensure that the sensors obtain a completely stationary target pattern during calibration, thereby ensuring the accuracy of the calibration process.

In another implementation of the embodiment of the disclosure, a plurality of target bodies 1 are provided. The plurality of target bodies 1 are respectively independently adjustable in attitude and height.

In this implementation, referring to FIG. 2, FIG. 2 is a schematic structural diagram of the main components of a target calibration device according to an implementation of an embodiment of the disclosure. FIG. 2 includes a front view and a side view of the target calibration device. As shown in FIG. 2, a target holder 2 of the target calibration device may be provided with a plurality of target bodies 1. For example, the plurality of target bodies 1 may be arranged facing away from each other. Each target body 1 is provided with its own independent height adjusting assembly and attitude adjusting assembly, so as to realize its own independent height adjustment and attitude adjustment, that is, to realize "the target can be lifted", "the target can be rotated" and "the target can be pitched" as shown in the figure. A target pattern of each target body 1 can be replaced. For example, the target pattern of a target body 1 which is a pattern A may be replaced with a pattern C, and the target pattern of another target body 1 which is a pattern B may be replaced with a pattern D. Four lockable rollers are arranged on the target base 3 to realize the movement and fixation of the target calibration device.

The target calibration device according to the embodiment of the disclosure can be applied to various after-sales calibration scenarios of self-driving vehicles, such as internal parameter calibration of a camera behind a windshield of a self-driving vehicle, and external parameter calibration of an on-board camera and a LiDAR. The target calibration device can also be used for vehicle calibration of various data acquisition vehicles without a calibration room. The target calibration device has the characteristics of easy operation, light weight, overall waterproofness, anti-rust, etc., and can effectively reduce calibration costs and improve the scenario adaptation capability of various calibration solutions.

It should be noted that the foregoing implementations are only used to explain the principles of the disclosure, and are not intended to limit the scope of protection of the disclosure. Those skilled in the art can adjust the foregoing structures without departing from the principle of the disclosure, so that the disclosure is applicable to more specific application scenarios.

For example, in an alternative implementation, the target body 1 may be in various shapes such as a circle, a square, a triangle, and a polygon, provided that sensors to be calibrated can effectively identify the target pattern of the target body 1, which does not depart from the principle of the disclosure and therefore shall fall within the scope of protection of the disclosure.

For example, in another alternative implementation, the target holder 2 may be a columnar holder, a tripod, or a holder with a plurality of support points, provided that the target body 1 can be supported, which does not depart from the principles of the disclosure, and therefore falls within the scope of protection of the disclosure.

For example, in still another alternative implementation, the first attitude adjusting assembly and the second attitude adjusting assembly may be arranged separately to realize their respective functions, or may be arranged in combination to realize their respective functions, provided that the horizontal rotation angle and the pitching rotation angle of the target body 1 can be independently adjusted, which does not deviate from the principle of the disclosure, and therefore falls within the scope of protection of the disclosure.

Finally, it should be noted that although the disclosure is described by taking the target calibration device for the sensors as an example, apparently, the target calibration device according to the disclosure are also applicable to the calibration process of other scenarios similar to or related to the sensors.

Heretofore, the technical solutions of the disclosure have been described with reference to the preferred implementations shown in the accompanying drawings. However, those skilled in the art can readily understand that the scope of protection of the disclosure is apparently not limited to these specific implementations. Those skilled in the art may make equivalent changes or substitutions to the related technical features without departing from the principle of the disclosure, and all the technical solutions with such changes or substitutions shall fall within the scope of protection of the disclosure.

## Claims

1. A target calibration device, comprising:
a target body, a target pattern on the target body being replaceable;
a target holder connected to the target body and provided with an adjustable assembly, the adjustable assembly for adjusting the target body in attitude and height; and
a target base connected to the target holder and provided with a movable assembly, the movable assembly being capable of moving and fixing the device.

2. The target calibration device according to claim 1, wherein the adjustable assembly comprises a height adjusting assembly and an attitude adjusting assembly, wherein the height adjusting assembly is used for adjusting the height of the target body, and the attitude adjusting assembly is used for adjusting the attitude of the target body.

3. The target calibration device according to claim 2, wherein the attitude comprises the horizontal rotation angle, and the attitude adjusting assembly comprises a first attitude adjusting assembly for adjusting the horizontal rotation angle of the target body, wherein the horizontal rotation angle is a rotation angle around the normal direction of the plane of the target body.

4. The target calibration device according to claim 3, wherein the target holder is provided with a horizontal rotation angle indicating assembly, and the horizontal rotation angle of the target body is adjusted according to the horizontal rotation angle indicating assembly.

5. The target calibration device according to any of claims 2 to 4, wherein the attitude comprises the pitching rotation angle, and the attitude adjusting assembly comprises a second attitude adjusting assembly for adjusting the pitching rotation angle of the target body.

6. The target calibration device according to claim 5, wherein the target holder is provided with a pitching rotation angle indicating assembly, and the pitching rotation angle of the target is adjusted according to the pitching rotation angle indicating assembly.

7. The target calibration device according to any of claims 2 to 6, wherein the height adjusting assembly is connected to a pulley structure arranged in the target holder, and the pulley structure is moved by adjusting the height adjusting assembly, so as to adjust the height of the target body.

8. The target calibration device according to claim 7, wherein the pulley structure has a damping function.

9. The target calibration device according to any of claims 2 to 8, wherein the target holder is provided with a height indicating assembly relative to the ground, and the height indicating assembly is used for determining the height of the target body relative to the ground.

10. The target calibration device according to any of claims 1 to 9, wherein the target body is detachably connected to the target holder, and the replacement of the target pattern is realized by replacing the target body.

11. The target calibration device according to any of claims 1 to 10, wherein a plurality of target bodies are provided, which are respectively independently adjustable in attitude and height.

12. The target calibration device according to any of claims 1 to 11, wherein the movable assembly consists of four lockable rollers arranged on the target chassis.

13. The target calibration device according to any one of claims 1 to 12, wherein the device is made of aluminum.
